(19) Europäisches Patentamt

European Patent Office

Office européen des brevets

(11) **EP 1 557 392 A1**

(12) **EUROPEAN PATENT APPLICATION**
published in accordance with Art. 158(3) EPC

(43) Date of publication:
27.07.2005 Bulletin 2005/30

(51) Int Cl.⁷: **B66B 11/08**, B66B 1/32,
F16D 51/10, F16D 65/27

(21) Application number: 02773030.8

(22) Date of filing: 29.10.2002

(86) International application number:
PCT/JP2002/011196

(87) International publication number:
WO 2004/039717 (13.05.2004 Gazette 2004/20)

(84) Designated Contracting States:
AT BE BG CH CY CZ DE DK EE ES FI FR GB GR
IE IT LI LU MC NL PT SE SK TR
Designated Extension States:
AL LT LV MK RO SI

(71) Applicant: MITSUBISHI DENKI KABUSHIKI
KAISHA
Tokyo 100-8310 (JP)

(72) Inventor: OKADA, Koji
c/o Mitsubishi Denki Kabushiki Kaisha
Chiyoda-ku, Tokyo 100-8310 (JP)

(74) Representative: HOFFMANN - EITLE
Patent- und Rechtsanwälte
Arabellastrasse 4
81925 München (DE)

(54) **BRAKE DEVICE OF ELEVATOR**

(57) To a braking device for an elevator of which the brake is released by braking a brake wheel (1) of an elevator by advancing brake shoes (5) by means of brake springs (6) and retracting brake shoes (5) by attracting movable iron cores (10) with electromagnets (11), additional elastic bodies (14) which resist the attraction force with a reaction force of an increase ratio larger than the increase ratio of the electromagnets (11) according to the decrease in the gap are fixed. When the brake is to be released, the electromagnets (11) gradually attract the movable iron cores (10) according to the progressive increase in the exciting current and keeping in equilibrium with the energized additional elastic bodies (14) on the way, so the collision noise caused by attachment can be reduced. Furthermore, when the brake is to be applied, the movable iron cores (10) gradually advance in accordance with the progressive decrease in the exciting current, so the collision noise caused when the brake shoes (5) abut the brake wheel (1) can be reduced.

FIG. 1

**Description**

Technical Field

The present invention relates to a braking device for an elevator by which is reduced the noise generated during braking and releasing of brake.

Background Art

Braking devices for elevators, especially those for braking hoisting machines, apply brake by friction caused by de-energizing electromagnets and pressing brake linings to a brake wheel with brake springs. On the other hand, when releasing brake, the electromagnets are energized and movable iron cores are attracted thereto, and brake shoes are separated from the brake wheel against the force of the brake springs.

One characteristic of an electromagnet is that the attraction force thereof increases as the distance from the movable iron core decreases. For this characteristic, when releasing brake, a noise is produced by attachment of the movable iron core to the electromagnet. Also, when applying brake, a noise is produced by pressure of the brake lining to the brake wheel by the brake spring. These noises produced at applying and releasing of brake are transmitted to the inside of cars and elevator halls, and has heretofore been causing noise problems. Although it is possible to reduce the noise by shortening the distance between the fixed iron core of the electromagnet and the movable iron core, however, because of this shortening, the distance between the brake lining and the brake wheel becomes insufficient, at releasing of brake and a part of them come into slidable contact, thus creating a noise while the car travels. Therefore, it is necessary to improve processing accuracy, and there is the problem that the productivity is low.

In Japanese non-examined laid-open patent publication No: Hei 8-73143; there is disclosed an example of a conventional braking device for an elevator by which the collision noise caused by the electromagnet when releasing the brake is reduced by fixing an acoustic board in the gap between the fixed iron core of the electromagnet and the movable iron core, and by making the movable iron cores collide on this acoustic board.

However, if an acoustic board is interposed between the fixed iron core and the movable iron core, the travel distance of the movable iron core decreases by the distance equivalent to that of the thickness of the acoustic board. Therefore, as aforementioned, the distance between the brake lining and the brake wheel at releasing of brake becomes insufficient, and it can be considered that a sliding noise may be generated. To avoid this, it can be considered to widen the distance between the fixed iron core and the movable iron core by the thickness equivalent to that of the acoustic board. However, if the gap becomes larger, the attraction force decreases due to increase in magnetic resistance. There is the problem that in order to avoid this decrease in attraction force, large electromagnets with increased magnetomotive force becomes necessary.

In Japanese non-examined laid-open patent publication No. Hei 8-73143, it is also described that the noise at releasing of brake is reduced by approximating the reaction force of the brake spring which energizes the movable iron lid (movable.iron core) in the direction away from the magnet frame (fixed iron core) to the increase ratio of the attraction force of the electromagnet in accordance with the decrease in the gap between the fixed iron core and the movable iron core, and controlling the attraction force of the electromagnet to be a predetermined value larger than the reaction force of the brake spring when releasing the brake. It is also described that when applying brake, the noise at operation is reduced by controlling the attraction force of the electromagnets to be a predetermined value smaller than the reaction force of the brake spring.

However, there is the problem that approximation of the increase ratio of the reaction force of the brake spring to the increase ratio of the attraction force of the electromagnet is not attained with facility. Furthermore, assuming the ratios to become approximate to each other, the difference in the values of the attraction force of the electromagnet and the reaction force of the brake spring is maintained at a predetermined value throughout the whole travel area of the movable iron core. For this reason, although the above-mentioned difference in the values become small due to the approximation of the above-mentioned predetermined value to the reaction force of the brake spring, and the noises at releasing of brake and at braking are reduced, there are problems such as lengthening in releasing operation and braking operation, or fear of malfunction of the brake due to the resistance generated during movement of the movable iron core.

This invention was devised to solve the aforementioned problems, and has as its object the provision of a braking device for elevators wherein the noises at releasing of brake and at applying of brake is reduced, also functioning without fail.

# EP 1 557 392 A1

Disclosure of the Invention

1. The present invention relates to a case where, to a braking device for an elevator which brakes a rotary body by advancing movable brake shoe with a brake spring and which comprises an electromagnet which releases brake by retracting the brake shoe by attracting the movable iron core by resisting the brake spring, an additional elastic body resisting an attraction force with a reaction force of an increase ratio larger than the increase ratio of an attraction force of an electromagnet in accordance with the decrease in the gap between the electromagnet and a movable iron core is fixed. First, the brake shoes are retracted resisting the reaction force of only the brake spring by progressively increasing the exciting current. Then, the brake shoe is retracted by gradually attracting the movable iron core in equilibrium with the total reaction force of the additional elastic body and the brake spring and according to the progressive increase in the exciting current. Finally, the brake shoe is retracted by attracting the movable iron core with an attraction force larger than the total reaction force, thus the exciting current is controlled to release the brake.

For this reason, when releasing the brake, as the electromagnet attracts and attaches to itself the movable iron core in accordance with the total reaction force of the additional elastic body and the brake spring on the way, it is possible to reduce the noise of collision of the electromagnet and the movable iron core. In addition to this, as the reaction force comes only from the brake spring at first, it is possible to release the brake without relation to the additional elastic body, while separating the brake shoe from the rotary body without fail.

2. Furthermore, the present invention relates to a case where a rotary body is braked by the braking device described in the above-mentioned paragraph 1, wherein the exciting current is progressively decreased from the state where the brake is released by attracting the movable iron core with an attraction force larger than the total reaction force of the brake spring and the additional elastic body. The brake shoe is advanced by gradually separating the movable iron core in accordance with the progressive decrease in the exciting current, while keeping in balance with the total reaction force from the state of attachment to the point of energization of the additional elastic body. Finally, the rotary body is braked by advancing the brake shoes with the reaction force of only the brake spring.

For this reason, in the case where the rotary body is controlled, the movable iron core gradually separates while keeping in balance with the total reaction force from the state of attachment to the point of energization of the additional elastic body, and as it is only at or after the point of energization that the brake shoe accelerates and advances with the reaction force of only the brake spring, the travel distance of the brake shoe, which is the cause of the noise, is essentially shortened, and the noise of collision with the rotary body can be reduced. Moreover, in the area where the movable iron core is separated with the reaction force of only the brake spring, the exciting current keeps on energizing the electromagnet although progressively decreasing, so the reaction force of the brake spring is lessened because of the attraction force of the electromagnet, and the collision noise can be reduced. Also, as the exciting currently becomes zero in the end and the brake shoe is pressed by the brake spring, the hoisting machine can be braked without relation to the additional elastic body and without fail.

3. Moreover, in the present invention, the additional elastic bodies are provided separated from and in parallel with the electromagnets in the direction the movable iron cores move.

For this reason, it is not necessary to widen the gap between the stationary iron core and the movable iron core although an additional elastic body is provided, and accordingly, the magnetic resistance in the gap does not increase.

4. Furthermore, in the present invention, the additional elastic body energizes the brake spring from the position in which the brake shoe releases the brake of the hoisting machine until the brake shoe ends retracting.

For this reason, it is possible to reduce the noise of collision of the electromagnet and the movable iron core, and also, as there is energization only from the brake spring and none from the additional elastic body when the brake shoe abuts the rotary body and the brake is applied and when the brake shoe separates from the rotary body and releases the brake, applying and releasing of brake can be performed as before without fail.

5. Moreover, in the present invention, the additional elastic body comprises of a coil spring. Therefore, it is possible to obtain stable reaction force for a long period of time.

6. Furthermore, in the present invention, the additional elastic body comprises of a rubber column body.

Therefore, no collision noise is generated when the additional elastic body energizes.

7. Moreover, in the present invention, the rubber column body comprises an adjustment means for adjusting the position of energization from itself to the brake spring.

For this reason, it is possible to cope by adjustment in cases where the rubber column body causes settling, where the point of energization moves, and where the reaction force decreases.

8. Furthermore, in the present invention, the additional elastic body comprises of a leaf spring.

Therefore, the dimension in the direction of pressure of the additional elastic body needs only to be that equal to the deflection amount of the leaf spring, thus the braking device can be installed even in a small space.

9. Moreover, in the present invention, it is possible to change the load rate by increasing or decreasing the distance from the supporting point of the leaf spring to the working point.

For this reason, it is possible to set the load rate at a required value even if the load rates of the leaf springs have individually changed.

Brief Description of the Drawings

Figure 1 is an elevational view of a preferred braking device for an elevator in accordance with the first embodiment of the present invention.

Figure 2 is similarly a side view of an electromagnet, in part shown in cross section.

Figure 3 is similarly a drawing of a control circuit of an electromagnet.

Figure 4 is similarly an explanatory diagram showing a motion of the braking device.

Figure 5 is similarly an explanatory diagram showing a motion of the braking device.

Figure 6 is an elevational view of a preferred braking device for an elevator in accordance with the second embodiment of the present invention.

Figure 7 is an elevational view of a preferred braking device for an elevator in accordance with the third embodiment of the present invention.

Figure 8 is similarly a cross sectional view of the main parts of the braking device.

Best Mode for Carrying out the Invention

To describe the present invention in more detail, the invention will be described by referring to the accompanying drawings. In each of the drawings, the same numerals are given to the same parts or the corresponding parts, and repeated explanation will be appropriately simplified or omitted.

First Embodiment

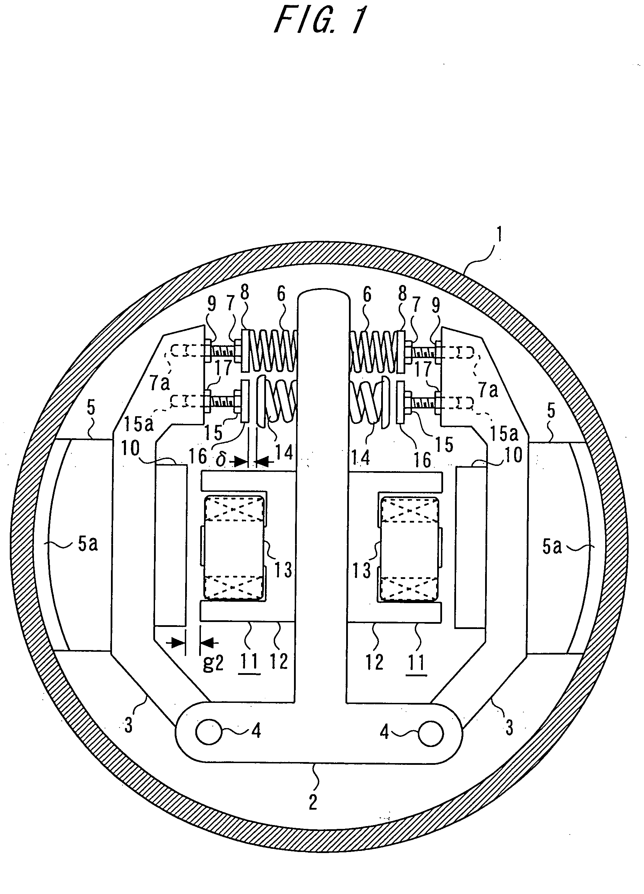

Figure 1 through Figure 5 show the first embodiment of the braking device for an elevator in accordance with the present invention.

In this first embodiment, an additional elastic body comprising a coil spring is fixed to a braking device used for a hoisting machine of an elevator.

In Figure 1, 1 denotes a brake wheel fixed on the hoisting machine, and here it is treated that it is also used as a rotor of a driving motor of the hoisting machine. 2 denotes a frame which is involved inside the brake wheel 1 and to which is fixed the structural components of the brake, 3 denotes a pair of arms of which one of the two ends are swingably supported by a pin 4 to the frame 2, 5 denotes brake shoes that are fixed to the perimeter of the arm 3 and advance and retract freely by the swings of the arms 3, 5a denotes brake linings that are fixed to the perimeter of the brake shoes 5 and are put on and taken off the inner surface of the brake wheel 1, 6 denotes brake springs that are implanted in the frame 2 and press the other ends of the arms 3, advance the brake shoes 5 and brake the brake wheel 1, 7 denotes pressing bolts that are threaded into to the screw holes 7a that are spirally dug in the other ends of the arms 3 and press the brake springs 6 via the pressing plates 8 which are attached on the top, and 9 denotes lock nuts that fix the pressing bolts 7.

10 denotes movable iron cores that are fixed to the inside surface of the arms 3, 11 denotes electromagnets that are fixed to the frame 2 and release the brake of the brake wheel 1 by attracting the movable iron cores 10 by energization and retract the brake shoes 5 by resisting the brake springs 6, and comprises E-shaped fixed iron cores 12 and coils 13 that excite the fixed iron cores 12.

14 denotes additional elastic bodies which energize the brake springs 6 during retraction of the brake shoes 5, and of which the increase ratio of the total reaction force of the brake spring 6 and itself is set to be larger than the increase ratio of the attraction force of the electromagnet 11 according to the decrease in the gap g between the electromagnet 11 and the movable iron core 10, and here, energizing coil springs which comprise of a coil spring are used. The energizing coil springs 14 are provided to the frame 2 in parallel to the electromagnets 11 in the horizontal direction. 15 denotes pressing bolts that press the energizing coil springs 14 via the pressing plates 16 which are spirally attached to and fixed to the top of the screw holes 15a that are spirally dug in the arms 3, and 17 denotes lock nuts that fix the pressing bolts 15.

The arms 3 make circular arc motions with the pins 4 as the pivot. Accordingly, the brake shoes 5 that are fixed to the arms 3, the movable iron cores 10, the brake springs 6 and the energizing coil springs 14 all make circular arc motions, however, as the distances of movement are short, the motions described below will be explained as linear motions.

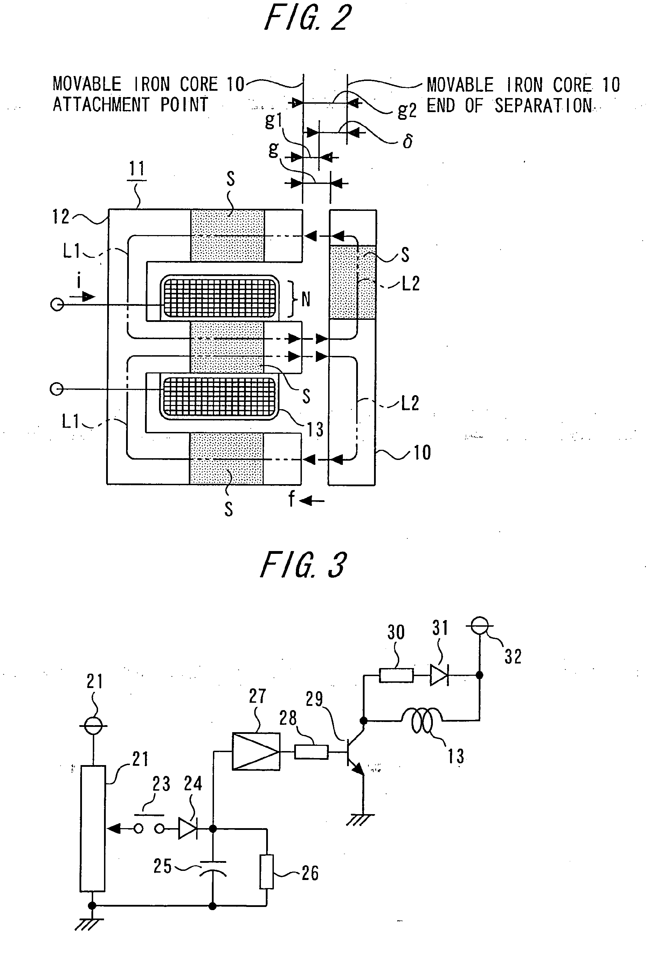

In Figure 2, g denotes a gap between the movable iron core 10 and the fixed iron core 12, g1 denotes an energization point where the energizing coil spring 14 energizes the brake spring 6 is viewed from the attachment point where the movable iron core 10 is attached to the fixed iron core 12, g2 denotes an end of separation viewed from the attachment point of the movable iron core 10 when the arm 3 is advanced by being pressed by the brake spring 6, $\delta$ denotes a margin of stroke from the end of separation g2 until the energizing coil spring 14 energizes the brake spring 6, L1 denotes a length of a magnetic path formed in the fixed iron core 12, L2 denotes a length of a magnetic path formed in the movable iron core 10, S denotes cross sectional areas of the iron cores 10 and 12 and the gap g in each of the magnetic paths, N denotes the number of turns of the coil 13, i denotes an exciting current of the coil 13, $\mu_0$ denotes a magnetic permeability of the air, $\mu$ denotes a magnetic permeability of the iron cores, $\mu_s$ denotes a relative magnetic permeability (= $\mu/\mu_0$) of the iron cores, Rm denotes closed-loop magnetic resistance formed by each of the magnetic paths, f denotes an attraction force of the electromagnet 11. Here, assuming that the iron cores 10 and 12 do not saturate magnetically, and also that they are without hysteresis, the following equations can be given:

$$\text{magnetic resistance } Rm = (L1+L2+2\mu_s g)/(\mu S)$$

$$\text{composite magnetic resistance } Rmt = Rm/2$$

$$\text{magnetic flux } \phi = Ni/Rmt = 2Ni/Rm = 2Ni\mu_s S/(L1+L2+2\mu_s g)$$

$$\text{attraction force } f = d\phi/dg = -2\mu_s \mu S(Ni)^2/(L1+L2+2\mu_s g)^2$$

That is, the attraction force f of the electromagnet 11 changes in inverse proportion to the square of the gap g, and it increases at a rapid rate as the gap g decreases.

Figure 3 shows a control circuit of the electromagnet 11, and 21 denotes a power supply, 22 denotes a resistance, 23 denotes a brake control contact which applies and releases the brake which is connected to the voltage dividing terminal of the resistance 22, 24 denotes a diode, 25 denotes a capacitor, 26 denotes a resistance, 27 denotes an amplifier, 28 denotes a base resistance, 29 denotes a transistor which has a collector terminal to which is connected the coil 13, 30 denotes a resistance, 31 denotes a diode, and 32 denotes a power supply.

The control circuit of the electromagnet 11 shown in Figure 3 functions as an energization controlling means for controlling the exciting current i so as to release the brake by retracting the brake shoe 5 by closure of the brake control contact 23, and also as a de-energization controlling means for controlling the exciting current i so as to brake the brake wheel 1 by advancing the brake shoe 5 by opening of the brake control contact 23.

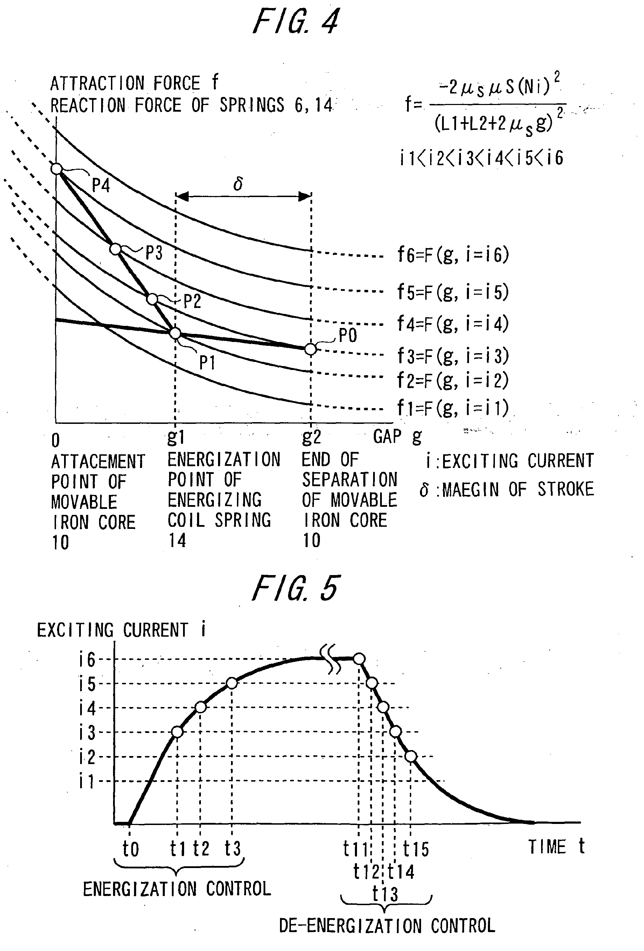

A motion of the braking device will be explained in accordance with Figure 4 and Figure 5.

1. In the case where the brake wheel 1 is stopped

The brake control contact 23 is opened and the coil 13 is de-energized. Thus, the brake shoe 5 abuts the inner circumference surface of the brake wheel 1 by being pressed and advanced with the reaction force P0 by the brake spring 6 via the arm 3. Accordingly, the movable iron core 10 is at the end of separation g2.

2. In the case where the brake of the brake wheel 1 is to be released

It is taken that the brake control contact 23 is closed at time t0. The voltage of the input of the amplifier 27, as shown in Figure 5, rises at a time constant which is defined by the capacitor 25 and the resistance 26. The output of the amplifier 27 is applied to the base of the transistor 29 via the base transistor 28. Accordingly, the exciting current i of the coil 13 rises at time t0 and becomes i3 at time t1, as shown in Figure 5. By this exciting current i3, the attraction force f3 of the electromagnet 11 becomes in equilibrium with the reaction force P0 of the brake spring 6. When the attraction force f of the electromagnet 11 becomes larger than the reaction force P0 of the brake spring 6, the attraction force f increases also by the increase in the exciting current i caused with elapse of time in addition to the increase caused by the decrease of the gap g, and the movable iron core 10 is attracted at a rapid speed by the value of difference between that of the reaction force of the brake spring 6. When the movable iron core 10 moves to the side of the electromagnet 11 by the length of the margin of stroke δ on the way, afterward the energizing coil spring 14 energizes the brake spring 6, and it resists the attraction force of the electromagnet 11 by the total reaction force. When the exciting current i becomes i4 at time t2, if the attraction force f4 becomes in equilibrium with the total reaction force P3, the attraction force f lessens the gap g between the movable iron core 10 enlarging in accordance with the increase in the exciting current i. That is, as the increase ratio of the total reaction force is larger than the increase ratio of the attraction force f caused by the decrease in the gap g, the movable iron core 10 moves in equilibrium with the total reaction force that is represented by the curved line P1→P4 shown in Figure 5. When the exciting current i becomes i5 at time t3 and the attraction force f becomes f5, the movable iron core 10 becomes attached to the electromagnet 11 being in equilibrium with the total reaction force P4. In the end, the exciting current i increases up to i6 and attracts the movable iron core 10 with the attraction force f6, and maintains the release of the braking of the brake.

That is, as the energizing coil spring 14 resists the attraction force f with a reaction force of an increase ratio larger than the increase ratio of the attraction force f of the electromagnets 11 according to the decrease in the gap g between the electromagnets 11 and the movable iron cores 10, the electromagnets 11 attract the movable iron cores 10 keeping the attraction force f and the total reaction force in equilibrium, and the collision noise at attachment can be reduced.

3. In the case where the brake wheel 1 is to be braked from the state in which the brake is released

It is assumed that the electromagnet 11 is energized by the exciting current i6 and the movable iron core 10 is attracted thereto, and that the braking of the brake is released. At time t11, when the brake control contact 23 is opened, the voltage of the amplifier 27, as shown in Figure 5, falls by being discharged at a time constant which is defined by the capacitor 25 and the resistance 26. Accordingly, the exciting current i of the electromagnet 11 lowers from time t11 and becomes i5 at time t12. By this exciting current i5, the attraction force f5 of the electromagnet 11 becomes in equilibrium with the total reaction force P4 of the forces of the brake spring 6 and the energizing coil spring 14. When the exciting current i decreases i5→i4→i3→i2 in accordance with the elapse of time t12→t13→t14→t15, the attraction forces f5→f4→f3→f2 become in equilibrium with the total reaction forces in the way of P4→P3→P2→P1 respectively, and the movable iron core 10 gradually increases the gap g. When the exciting current i becomes i2, the energization by the energizing coil spring 14 is released. When the exciting current i becomes lower than i2, the attraction force f, in addition to the decrease caused by the increase of the gap g, decreases also by the decrease in the exciting current i caused with elapse of time, and the movable iron core 10 is separated to the end of separation g2 by the value of difference between that of the reaction force of the brake spring 6, and brakes the brake wheel 1.

That is, the distance for abutting the brake wheel 1 and the brake lining 5a by accelerating and advancing the brake shoe 5 by the difference value between the attraction force of the exciting current i and the reaction force of the brake spring 6 decreases to the margin of stroke δ, which has hitherto been the distance from the stationary iron core 12 to the end of separation g2. Thus, the collision noise generated when abutting is reduced.

According to the above-mentioned first embodiment, in the case where the brake is to be released, as the electromagnet 11 gradually attracts and attaches to itself the movable iron core 10 in accordance with the gradual increase of the exciting current i keeping in balance with the total reaction force of the forces of the energized energizing coil spring 14 and the brake spring 6 on the way, the collision noise of the electromagnet 11 and the movable iron core 10 can be reduced. In addition to this, as there is the reaction force of only the brake spring 6 at first, it is possible to release the brake by separating the brake shoe 5 from the brake wheel 1 without relation to the energizing coil spring 14 and without fail.

Moreover, in the case where the hoisting machine is to be braked, as the movable iron core 10 gradually separates from the attached state until the energization keeping in balance with the total reaction force point of the energizing coil spring 14, and it will be at the margin of stroke δ after the point of energization g1 that the brake shoe 5 is separated and advanced by the force of only the brake spring 6, the acceleration distance of the brake shoe 5 which is a cause of generation of noise is essentially shortened, and the collision noise with the brake wheel 1 can be reduced. In addition to this, in the area where the movable iron core 10 is separated by the reaction force of only the brake spring 6, even though the exciting current i gradually decreases, it keeps on energizing the electromagnet 11, so the reaction force of the brake spring 6 becomes lessened and it is possible to reduce the collision noise. Further, the exciting current i becomes zero in the end and the brake shoe 5 is pressed by the brake spring 6, so it is possible to brake the hoisting machine with no relation to the energizing coil spring 14 and without fail.

Furthermore, as the energizing coil springs 14 are provided in parallel with and apart from the electromagnets 11 in the direction the movable iron core moves 10, even though the energizing coil springs 14 are provided, it is not necessary to widen the gap g between the fixed iron core and the movable iron core, and accordingly, the magnetic resistance in the gap g does not increase.

Moreover, as the energizing coil springs 14 are made to energize the brake springs 6 from the position the brake shoes 5 release until when they finish retracting, it is possible to reduce the noise of collision of the electromagnets 11 and the movable iron cores 10, and furthermore, when the brake shoes 5 abut the brake wheel 1 and apply the brake and when the brake shoes 5 separate from the brake wheel 1 and release the brake, energization is made from only the brake spring 6 and none from the energizing coil spring 14, braking and releasing of the brake can be performed as before without fail.

Furthermore, as the brake spring 6 is energized by the energizing coil spring 14, it is possible to obtain a stable energizing reaction force for a long period of time.

Second Embodiment

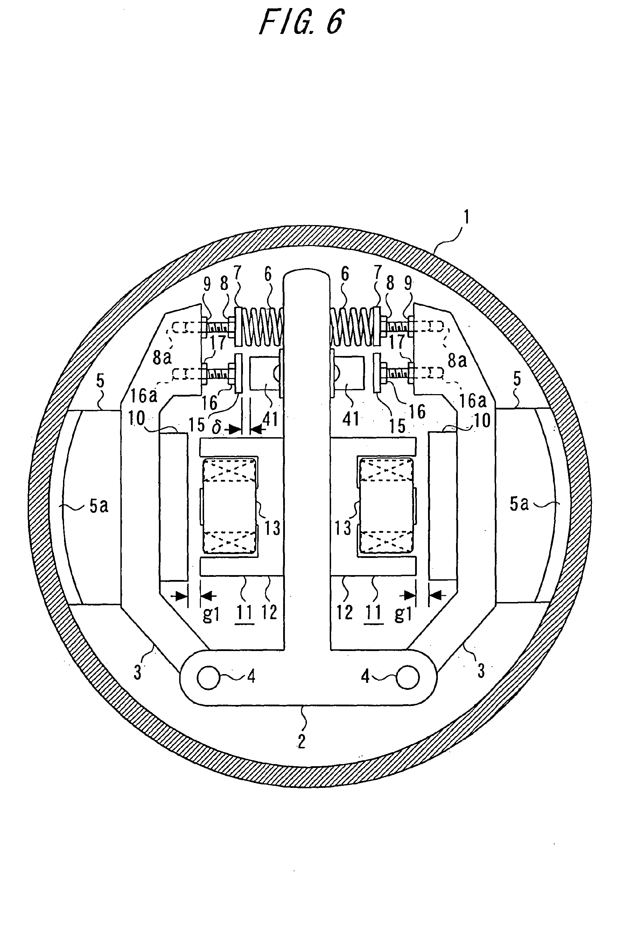

Figure 6 shows the second embodiment of the present invention.

In the second embodiment, the additional elastic body is comprised of an energizing rubber column body 41 instead of the energizing coil spring 14, and the position where the energizing elastic column body 41 energizes the brake spring 6 is adjusted by advance and retraction according to the amount of screwing of the supporting bolt 16.

The lock nut 17, which fixes the supporting bolt 16 and its amount of screwing, functions as an adjustment means for adjusting the position where the energizing rubber column body 41 energizes the brake spring 6.

According to the above-mentioned second embodiment, as the brake spring 6 is energized by the energizing rubber column body 41, no collision noise will be generated when the pressing plate 15 abuts the energizing elastic column body 41.

Also, it is possible to cope by adjustment of the amount of screwing of the supporting bolt 16 in cases where the rubber column body 41 causes settling, where the point of energization moves, and where the reaction force decreases.

Third Embodiment

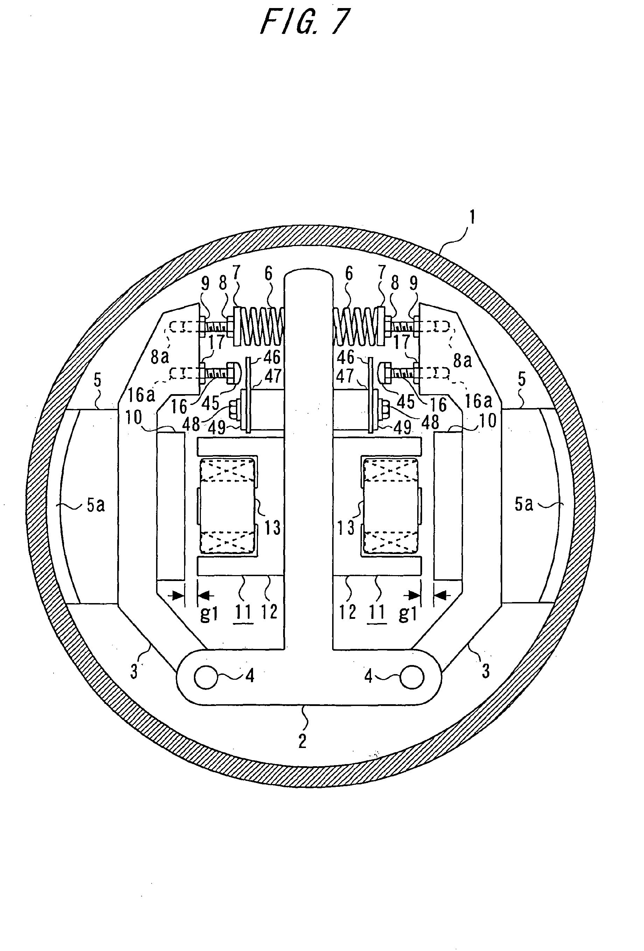

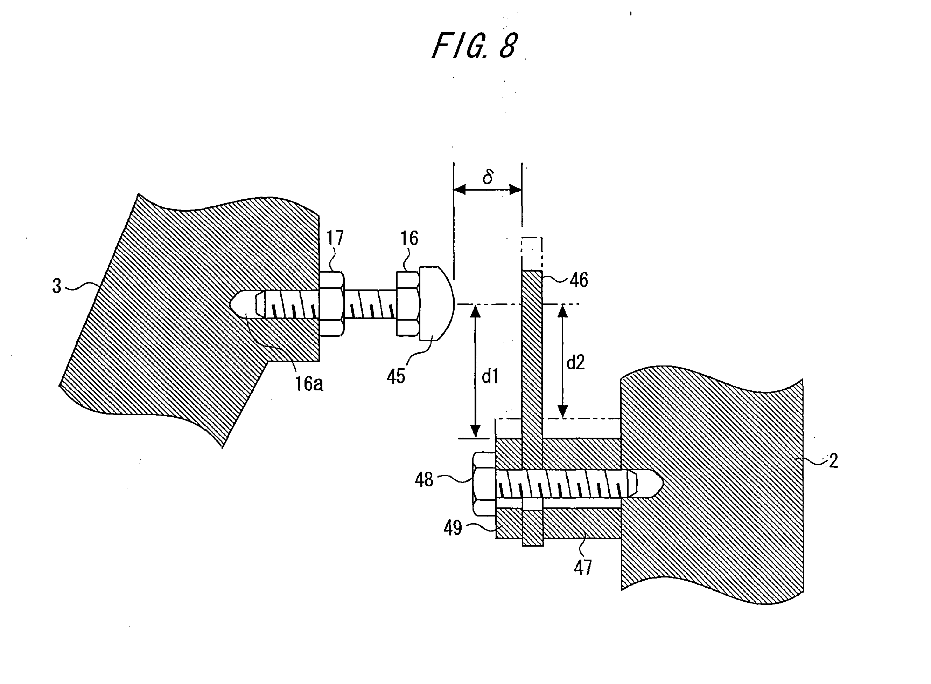

Figure 7 and Figure 8 show the third embodiment of the present invention.

In the third embodiment, the additional elastic body is comprised of an energizing leaf spring, and the load rate of this leaf spring can be changed.

That is, in Figure 7, 45 denotes pressing crowns fixed on top of the supporting bolts 16, 46 denotes energizing leaf springs extended in a direction orthogonal to the direction of advance and retraction of the brake shoes 5, 47 denotes spacers that lie between the energizing leaf springs 46 and the frame 2, 48 denotes bolts which make the washers 49 and the spacers 47 hold the energizing leaf springs 46 between themselves and which slidably penetrate the spacers 47 to spirally attach to and fasten on the frame 2.

As shown in Figure 8, the spacers 47 and the washers 49 have long holes drilled through them, and the distance between the supporting point and the working point increase and decrease between the distances d1 and d2 shown in the drawing by advance and retraction of the energizing leaf spring 46 in the area of the long holes. By the increase and decrease, it is possible to change the load rate. Here, the spacers 47 which have long holes drilled though them, the washers 49 and the bolts 48 function as a load rate adjusting means. Furthermore, it is possible to carry out adjustment of the point g1 of energization by the supporting bolts 16 and the lock nuts 17.

According to the aforementioned third embodiment, as the additional elastic body is comprised of an energizing leaf spring, the dimension in the direction of pressure of the additional elastic body needs only to be that equal to the deflection amount of the leaf spring, so the braking device can be installed even in a small space.

Moreover, as the load rate can be changed by increasing and decreasing the distance between the supporting point and the working point of the energizing leaf springs, even if the load rates of the energizing leaf springs themselves become different from each other due to machining tolerance, setting at the required load rate is possible.

Industrial Applicability

As described above, the braking device in the present invention can be applied not only to hoisting machines of elevators but to any kind of braking devices that advance and retract brake shoes with electromagnets and springs, however, it is especially useful for braking machines for hoisting machines of elevators which are installed close to passengers or rooms which are used by people.

**Claims**

1. A braking device for an elevator comprising: movable brake shoes; brake springs to apply brake on the rotary body by advancing the brakes shoes; and electromagnets which attract movable iron cores by being energized by a predetermined exciting current and which release said brake of said rotary body by retracting said brake shoes by resisting said brake springs, **characterized by** comprising:

additional elastic bodies which resist attraction force of said electromagnets with a reaction force of an increase ratio larger than the increase ratio of an attraction force of said electromagnet according to a decrease in a gap between said electromagnet and said movable iron core caused by said brake shoes energizing said brake springs during retraction; and
energization controlling means for controlling said exciting current so as to release said brake firstly by gradually increasing said exciting current and retracting said brake shoes by resisting a reaction force of only said brake springs; by gradually retracting said brake shoes according to a progressive increase of said exciting current while keeping in equilibrium with a total reaction force of energized said additional elastic bodies and said brake springs on the way; and finally by retracting said brake shoes by attracting said movable iron cores with an attraction force larger than said total reaction force.

2. A braking device for an elevator comprising: movable brake shoes; brake springs to apply brake on the rotary body by advancing the brakes shoes; and electromagnets which attract movable iron cores by being energized by a predetermined exciting current and which release said brake of said rotary body by retracting said brake shoes by resisting said brake springs, **characterized by** comprising:

additional elastic bodies which resist an attraction force of said electromagnet with a reaction force of an increase ratio larger than the increase ratio of an attraction force of said electromagnet according to a decrease in a gap between said electromagnet and said movable iron core caused by said brake shoes energizing said brake springs during retraction; and
de-energization controlling means for controlling said exciting current so as to gradually decrease said exciting current from a state where said brake is released by retracting said brake shoes by attracting said movable iron cores with an attraction force larger than the total reaction force of said brake springs and said additional elastic bodies, firstly by gradually advancing said brake shoe according to progressive decrease of said exciting current while keeping in equilibrium with said total reaction force, and finally by braking said rotary body by being pressed back by the reaction force of only said brake springs and advancing said brake shoes.

3. The braking device for an elevator according to claim 1 or claim 2, wherein the additional elastic bodies are provided in parallel with and apart from the electromagnet in the direction the movable iron cores move.

4. The braking device for an elevator according to claim 1 or claim 2, wherein the additional elastic bodies energize the brake springs and resist the attraction force of the electromagnets from the position where they release the brake until the brake shoes end retracting.

5. The braking device for an elevator according to claim 1 or claim 2, wherein the additional elastic bodies are coil springs.

6. The braking device for an elevator according to claim 1 or claim 2, wherein the additional elastic bodies are rubber column bodies.

7. The braking device for an elevator according to claim 6, comprising adjusting means for adjusting the position that the rubber column bodies energize the brake springs.

8. The braking device for an elevator according to claim 1 or claim 2, wherein the additional elastic bodies are leaf springs.

9. The braking device for an elevator according to claim 8, wherein the leaf springs comprise load rate adjusting means for changing a load rate by increasing and decreasing the distance from the supporting point to the working point.

## FIG. 1

## *FIG. 2*

MOVABLE IRON CORE 10
ATTACHMENT POINT

MOVABLE IRON CORE 10
END OF SEPARATION

## *FIG. 3*

## FIG. 4

ATTRACTION FORCE f
REACTION FORCE OF SPRINGS 6, 14

$$f = \frac{-2\mu_s \mu S (Ni)^2}{(L1+L2+2\mu_s g)^2}$$

$$i1 < i2 < i3 < i4 < i5 < i6$$

δ

P4

P3

P2

P0

P1

f6=F(g, i=i6)

f5=F(g, i=i5)

f4=F(g, i=i4)

f3=F(g, i=i3)

f2=F(g, i=i2)

f1=F(g, i=i1)

0          g1          g2          GAP g

| ATTACEMENT POINT OF MOVABLE IRON CORE 10 | ENERGIZATION POINT OF ENERGIZING COIL SPRING 14 | END OF SEPARATION OF MOVABLE IRON CORE 10 |
|---|---|---|

i : EXCITING CURRENT
δ : MAEGIN OF STROKE

## FIG. 5

EXCITING CURRENT i

i6
i5
i4
i3
i2
i1

t0  t1 t2  t3          t11  t15          TIME t
                       t12  t14
ENERGIZATION CONTROL     t13

DE-ENERGIZATION CONTROL

# FIG. 6

# FIG. 7

# FIG. 8

EP 1 557 392 A1

## INTERNATIONAL SEARCH REPORT

| International application No. |
| --- |
| PCT/JP02/11196 |

A. CLASSIFICATION OF SUBJECT MATTER
   Int.Cl$^7$  B66B11/08, B66B1/32, F16D51/10, F16D65/27

According to International Patent Classification (IPC) or to both national classification and IPC

B. FIELDS SEARCHED

Minimum documentation searched (classification system followed by classification symbols)
   Int.Cl$^7$  B66B1/00-B66B11/08, F16D49/00-F16D71/04

Documentation searched other than minimum documentation to the extent that such documents are included in the fields searched
   Jitsuyo Shinan Koho          1922-1996   Jitsuyo Shinan Toroku Koho    1996-2003
   Kokai Jitsuyo Shinan Koho    1971-2003   Toroku Jitsuyo Shinan Koho    1994-2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 8-73143 A  (Toshiba Corp.),<br>19 March, 1996 (19.03.96),<br>(Family: none) | 1-9 |
| A | JP 2000-110868 A  (Mitsubishi Electric Corp.),<br>18 April, 2000 (18.04.00),<br>(Family: none) | 1-9 |
| A | JP 2000-65100 A  (Akebono Brake Industry Co., Ltd.),<br>03 March, 2000 (03.03.00),<br>(Family: none) | 1-9 |
| A | JP 4-333487 A  (Hitachi, Ltd.),<br>20 November, 1992 (20.11.92),<br>& US 5244060 A | 1-9 |

☐ Further documents are listed in the continuation of Box C.       ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23 July, 2003 (23.07.03) | 12 August, 2003 (12.08.03) |

| Name and mailing address of the ISA/<br>   Japanese Patent Office | Authorized officer |
| --- | --- |
| Facsimile No. | Telephone No. |

Form PCT/ISA/210 (second sheet) (July 1998)

**INTERNATIONAL SEARCH REPORT**

International application No.

PCT/JP02/11196

| C (Continuation). DOCUMENTS CONSIDERED TO BE RELEVANT |||
|---|---|---|
| Category* | Citation of document, with indication, where appropriate, of the relevant passages | Relevant to claim No. |
| A | Microfilm of the specification and drawings annexed to the request of Japanese Utility Model Application No. 172553/1980(Laid-open No. 94722/1982) (Hitachi, Ltd.), 10 June, 1982 (10.06.82), (Family: none) | 1-9 |
| A | Microfilm of the specification and drawings annexed to the request of Japanese Utility Model Application No. 136399/1977(Laid-open No. 61979/1979) (Seiichi TERAOKA), 28 April, 1979 (28.04.79), (Family: none) | 1-9 |
| A | JP 45-28954 B1 (Kihei SHIMURA), 21 September, 1970 (21.09.70), (Family: none) | 1-9 |
| E,A | JP 2003-2568 A (Mitsubishi Electric Corp.), 08 January, 2003 (08.01.03), (Family: none) | 1-9 |

Form PCT/ISA/210 (continuation of second sheet) (July 1998)